# EUROPEAN PATENT SPECIFICATION

(11) **EP 1 431 227 B1**
(45) Date of publication and mention of the grant of the patent: **26.12.2007**
(21) Application number: 01945676.3
(22) Date of filing: 28.06.2001
(51) Int. Cl.: B66B 1/44, B66B 3/00, B66B 5/14, G01G 19/14, B66B 7/06, B66B 7/08

(54) **LOAD DETECTOR OF ELEVATOR**
LASTDETEKTOR FÜR AUFZUG
DETECTEUR DE CHARGE D'ASCENSEUR

(43) Date of publication of application: 23.06.2004
(73) Proprietor: MITSUBISHI DENKI KABUSHIKI KAISHA, Chiyoda-ku Tokyo 100-8310 (JP)
(72) Inventor: KAWAKAMI, Shigenobu, c/o Mitsubishi Denki K.K., Tokyo 100-8310 (JP); TAKIGAWA, Yukihiro, c/o Mitsubishi Denki K.K., Tokyo 100-8310 (JP)
(74) Representative: HOFFMANN EITLE
(86) International application number: PCT/JP2001/005589
(87) International publication number: WO 2003/002445

(56) References cited:
- JP-A- 2 008 176
- JP-A- 3 182 485
- JP-U- 58 176 862

## Description

### TECHNICAL FIELD

This invention relates to an elevator load detecting device for detecting a load on a car.

### BACKGROUND ART

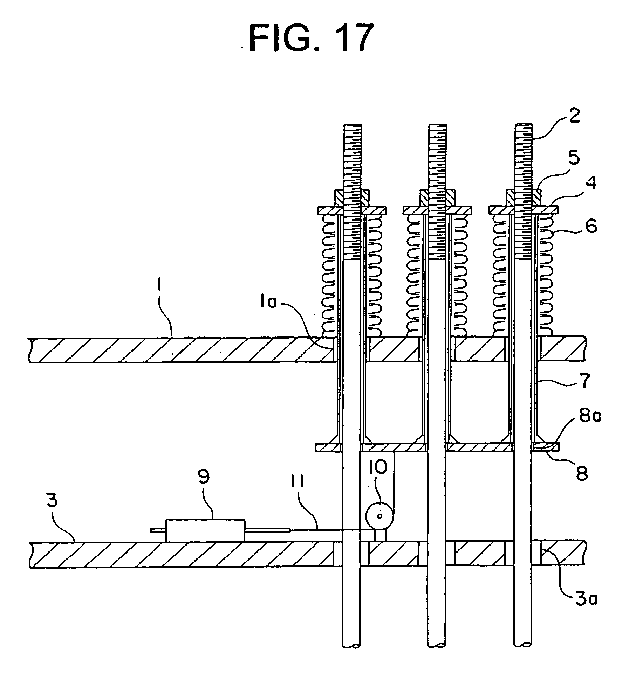

Fig. 17 is a diagram showing the construction of an example of a conventional elevator load detecting device. In the drawing, a base 1 is provided with a plurality of through-holes 1a. A shackle rod 2 is passed through each through-hole 1a. A main rope (not shown) is connected to the lower end portion of each shackle rod 2. A car and a balance weight are suspended in a hoistway by the main rope.

Fixed below the base 1 is a support plate 3 opposed to the lower surface of the base 1. The support plate 3 is provided with a plurality of through-holes 3a through which the shackle rods 2 are passed. A spring seat 4 is mounted to the upper end portion of each shackle rod 2. Further, threadedly engaged with the upper end portion of each shackle rod 2 is a nut 5 for regulating upward movement of the spring seat 4 with respect to the shackle rod 2.

Between the base 1 and the spring seats 4, there are arranged a plurality of shackle springs (coil springs) 6 receiving the load of the shackle rods 2 so as to surround the shackle rods 2. Passed through the through-holes 1a of the base 1 are a plurality of shackle pipes 7 surrounding the shackle rods 2. The upper end portion of each shackle pipe 7 is fixed to the spring seat 4.

A detection plate 8 is fixed to the lower end portions of the shackle pipes 7. The detection plate 8 is provided with a plurality of through-holes 8a through which the shackle rods 2 are passed. Provided on the support plate 3 are a differential transformer 9 and a rotatable pulley 10. A wire 11 is connected between the detection plate 8 and the differential transformer 9. The intermediate portion of the wire 11 is wrapped around the pulley 10.

Next, the operation of this device will be described. The load of the car is supported by the base 1 through the main rope, the shackle rods 2, the nuts 5, the spring seats 4, and the shackle springs 6. Further, according to variations in the car load, the shackle rods 2 and the spring seats 4 are vertically displaced, and the shackle springs 6 expand and contract.

The displacement amount of the spring seats 4 is transmitted to the detection plate 8 through the shackle pipes 7. Further, the detection plate 8 equalizes minute differences in displacement between the spring seats 4. Displacement of the detection plate 8 is transmitted to the differential transformer 9 through the wire 11. The differential transformer 9 outputs a signal according to the displacement amount of the detection plate 8. Thus, by computing the output signal from the differential transformer 9, it is possible to obtain the load on the car.

A conventional load detecting device as described above is disclosed, for example, in JP 08-005605 B.

In the above-described conventional construction, the expansion/contraction amount of the shackle springs 6 is transmitted to the detection plate 8 through the spring seats 4 and the shackle pipes 7, and further, the displacement amount equalized by the detection plate 8 is transmitted to the differential transformer 9 through the wire 11, so that the transmission route is rather complicated, and there is the danger of an error being generated somewhere in the transmission route and the detection accuracy being deteriorated.

JP 58176862 U discloses a detecting device comprising a detection wire, a frame, a detector and a plurality of shackle rods connected to the end portions of a main rope with a plurality of springs, pulley support members and rotatable rod side pulleys.

JP 2008176 A discloses a load detection device for an elevator with a cage frame, an elastic body which is compressed according to the weight and an upper beam which is then descended. A displacement body is loosened by the part thereof. The displacement body is wound the pulley being rotated according to the movement of the displacement body.

JP 03182485 A discloses an elevator cage with strain metals connected to a supporter by multiple springs. A differential transformed converts the deflection quantity of the multiple springs into an electric signal.

### DISCLOSURE OF THE INVENTION

This invention has been made with a view toward solving the above problem in the prior art. It is an object of this invention to provide an elevator load detecting device in which displacement of the shackle rods is transmitted through a simple transmission route and in which it is possible to achieve an improvement in accuracy in load detection.

To this end, according to one aspect of the present invention, there is provided an elevator load detecting device which is provided in an elevator equipped with a car, a plurality of main ropes for suspending the car, a base for receiving a load applied to the main ropes, a plurality of shackle rods connected to end portions of the main ropes and adapted to be displaced with respect to the base according to the load, and a plurality of shackle springs provided between the shackle rods and the base and adapted to expand and contract with displacement of the shackle rods, the device adapted to detect the load of the car from displacement of the shackle rods, comprising: a pulley support member connected to at least one of the shackle rods and adapted to be displaced integrally with the shackle rods; a rotatable rod-side pulley mounted on the pulley support member; a frame provided on the base; a detection wire whose intermediate portion is wrapped around the rod-side pulley and whose one end portion is connected to the frame; and a detector which is mounted on the frame, to which the other end portion of the detection wire is connected and which is adapted to detect the displacement amount of the shackle rods through the detection wire.

### BRIEF DESCRIPTION OF THE DRAWINGS

Fig. 1 is a structural diagram showing an elevator according to Embodiment 1 not part of this invention;
Fig. 2 is a front view showing a load detecting device of Fig. 1;
Fig. 3 is a side view showing a main portion of Fig. 2;
Fig. 4 is a structural diagram showing an elevator according to Embodiment 2 not part of this invention;
Fig. 5 is a front view showing an elevator load detecting device according to Embodiment 3 not part of this invention;
Fig. 6 is a front view showing a detection pulley of Fig. 5;
Fig. 7 is a bottom view showing the detection pulley of Fig. 6;
Fig. 8 is a front view showing an elevator load detecting device according to Embodiment 4 not part of this invention;
Fig. 9 is a front view showing an elevator load detecting device according to Embodiment 5 not part of this invention;
Fig. 10 is a side view showing a main portion of an elevator load detecting device according to Embodiment 6 of this invention;
Fig. 11 is a front view showing a main portion of Fig. 10;
Fig. 12 is a sectional view of a nut and support seat of Fig. 11;
Fig. 13 is a bottom view of the support seat of Fig. 12;
Fig. 14 is a side view showing a state in which a shackle rod of Fig. 10 is inclined;
Fig. 15 is a side view showing a main portion of an elevator load detecting device according to Embodiment 7 not part of this invention;
Fig. 16 is a half sectional view of a main portion of Fig. 15; and
Fig. 17 is a structural diagram showing an example of a conventional elevator load detecting device.

### BEST MODE FOR CARRYING OUT THE INVENTION

Preferred embodiments of this invention will now be described with reference to the drawings.

### Embodiment 1

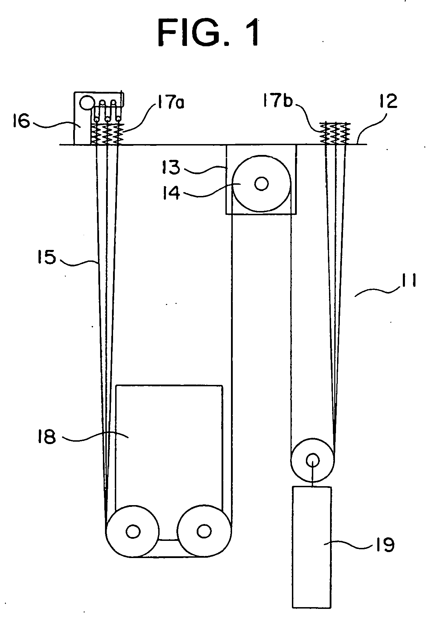

Fig. 1 is a structural diagram showing an elevator according to Embodiment 1 not part of this invention. In the drawing, a base 12 is fixed in the upper portion of a hoistway 11. The base 12 consists, for example, of a support beam fixed to the upper portion of the interior of the hoistway 11 or the floor portion of a machine house. The base 12 supports a driving device 13. The driving device 13 has a drive sheave 14.

A plurality of main ropes 15 are wrapped around the drive sheave 14. One end portion of each main rope 15 is connected to the base 12 through a first rope fastener portion 17a. The other end portion of each main rope 15 is connected to the base 12 through a second rope fastener portion 17b. A car 18 and a balance weight 19 are suspended in the hoistway 11 by the main ropes 15. The first rope fastener portion 17a is provided with a load detecting device 16.

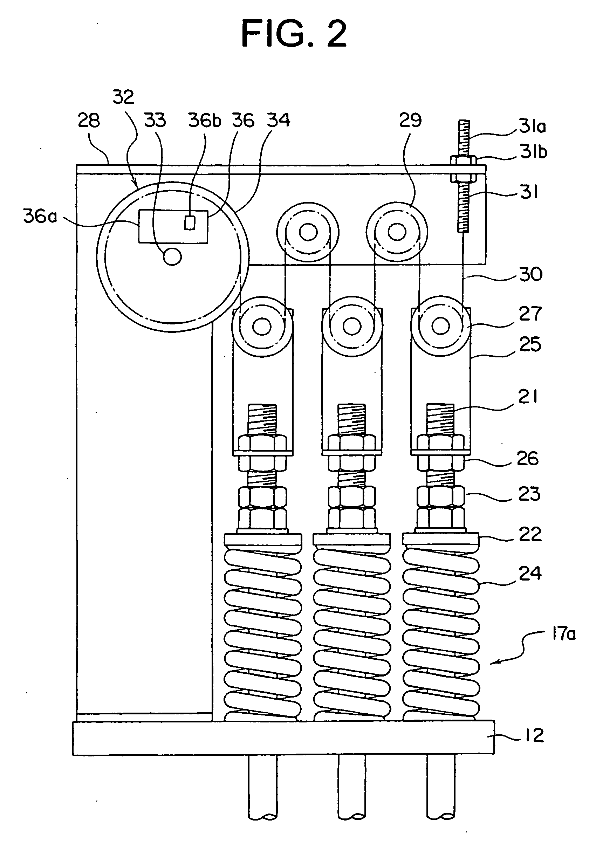

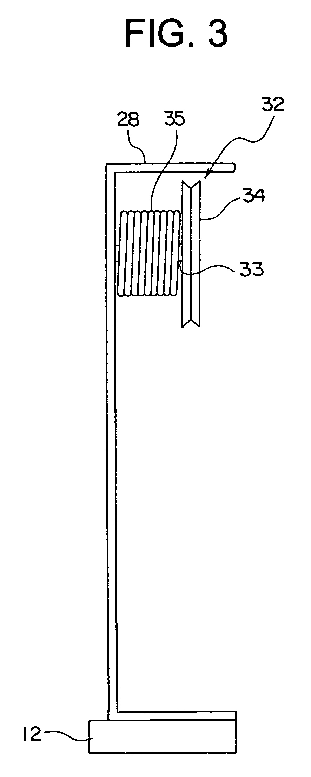

Next, Fig. 2 is a front view showing the load detecting device 16 of Fig. 1, and Fig. 3 is a side view showing a main portion of Fig. 2. In the drawings, the main ropes 15 are respectively connected to the lower end portions of a plurality of shackle rods 21 passed through the base 12. A spring seat 22 is mounted to the upper end portion of each shackle rod 21. Threadedly engaged with the upper end portion of each shackle rod 21 are a plurality of nuts 23 for regulating upward movement of the spring seat 22 with respect to the shackle rod 21.

Between the base 12 and the spring seats 22, a plurality of shackle springs (coil springs) 24 receiving the load of the shackle rods 21 are arranged so as to surround the shackle rods 21. The first rope fastener portion 17a has the shackle rods 21, the spring seats 22, the nuts 23, and the shackle springs 24.

A pulley support member 25 adapted to be displaced with the shackle rod 21 is mounted to the upper end portion of each shackle rod 21 by means of a plurality of nuts 26. A rotatable rod-side pulley 27 is mounted on each pulley support member 25.

A frame 28 is provided upright on the base 12. A plurality of rotatable frame-side pulleys 29 are mounted on the frame 28. The intermediate portion of a detection wire 30 is alternately wrapped around the rod-side pulleys 27 and the frame-side pulleys 29. One end portion of the detection wire 30 is fastened to the frame 28 through the intermediation of a fastening member 31 having a bar screw 31a and a plurality of nuts 31b.

Mounted on the frame 28 is a detector 32 for detecting the displacement amount of the shackle rods 21 (the expansion/contraction amount of the shackle springs 24) through the detection wire 30. The detector 32 has a detection shaft 33 fixed to the frame 28, a detection pulley 34 around which the other end portion of the detection wire 30 is fixedly wrapped and which is rotatable about the detection shaft 33, a torsion spring 35 as tension imparting means which urges the detection pulley 34 so as to take up the detection wire 30 (counterclockwise in Fig. 2) and which imparts tension to the detection wire 30, and an angle sensor 36 which detects the rotation angle of the detection pulley 34 and outputs a detection signal.

The angle sensor 36 has a sensor substrate 36a mounted on the detection pulley 34, a sensor main body 36b mounted on the sensor substrate, and a connector (not shown). As the sensor main body 36b, an inclination sensor, for example, is used whose output varies according to the angle (inclination) of the sensor main body 36b.

Next, the operation of this device will be described. When the load of the car 18 varies, the shackle rods 21 are vertically displaced, and the shackle springs 24 are expanded/contracted. Further, when the shackle rods 21 are displaced, the pulley support members 25 and the rod-side pulleys 27 are also integrally displaced, and the length between one end portion of the detection wire 30 and the detection pulley 34 varies, with the result that the rotation angle of the detection pulley 34 varies.

That is, the rotation angle of the detection pulley 34 varies according to the load of the car 18. Further, the rotation angle of the detection pulley 34 is detected by the sensor main body 36. Thus, a detection signal in proportion to the load of the car 18 is output from the sensor main body 36. By computing the output signal from the sensor main body 36, it is possible to obtain the load of the car 18.

In this load detecting device 16, the variation amount of the length between one end portion of the detection wire 30 and the detection pulley 34 is double the total displacement amount of the three shackle rods 21, so that it is possible to perform detection with displacement amount enlarged, whereby it is possible to achieve an improvement in detection accuracy with a simple structure.

Further, by appropriately selecting the diameter of the pulley 34, it is possible to adjust the variation amount of the rotation angle of the detection pulley 34 with respect to the variation amount of the detection wire 30, thereby being capable of achieving an improvement in detection accuracy. Further, it is possible to facilitate the setting of the resolution and detection angle. That is, taking into account the output characteristics of the sensor main body 36b, it is possible to select the diameter of the pulley 34 such that the angle of the sensor main body 36b varies within a range which allows detection with optimum accuracy.

Further, a change in the number of main ropes 15 can be easily coped with.

Furthermore, since one end portion of the detection wire 30 is fastened to the frame 28 through the intermediation of the fastening member 31 having the bar screw 31a and the plurality of nuts 31b, the detection wire 30 is moved by displacing the bar screw 31a with respect to the frame 28, making it possible to easily reset the angle of the detection pulley 34.

### Embodiment 2

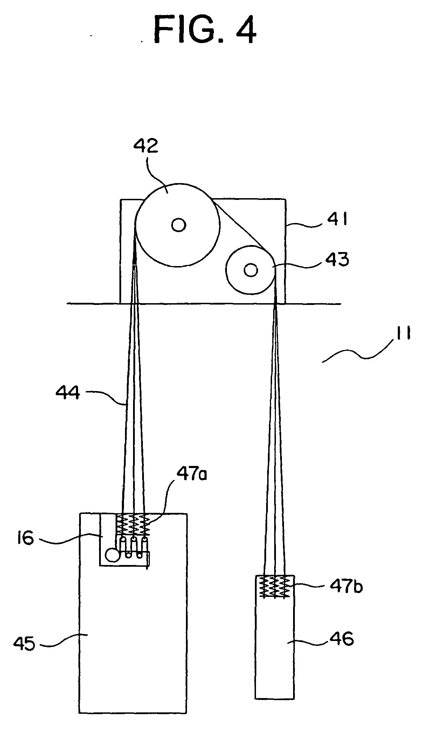

Next, Fig. 4 is a structural diagram showing an elevator according to Embodiment 2 not part of this invention. In the drawing, a driving device 41 is arranged in the upper portion of the hoistway 11. The driving device 41 is provided with a drive sheave 42 and a deflector wheel 43. A plurality of main ropes 44 are wrapped around the drive sheave 42 and the deflector wheel 43. A car 45 is suspended at one end of the main ropes 44. At the other end of the main ropes 44, a balance weight 46 is suspended.

One end portions of the main ropes 44 are connected to the car 45 through the intermediation of a first rope fastener portion 47a. The other end portions of the main ropes 44 are connected to the balance weight 46 through the intermediation of a second rope fastener portion 47b.

The first rope fastener portion 47a is provided with a load detecting device 16. The construction of the load detecting device 16 is the same as that of Embodiment 1; it is used upside down as compared to the case of Figs. 2 and 3. Further, in Embodiment 2, the base 12 is an upper beam situated, for example, in the upper portion of the car 45.

While Embodiment 1 is applied to a 2:1 roping type elevator, this invention is also applicable to a 1:1 roping type elevator by mounting the load detecting device 16 on the car 45 as shown in Fig. 4, making it possible to obtain the same effect as that of Embodiment 1.

### Embodiment 3

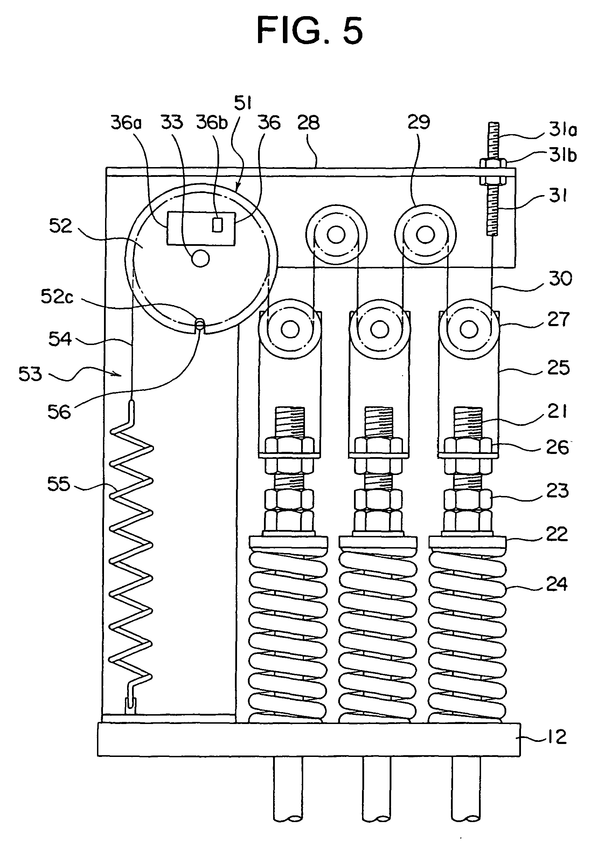

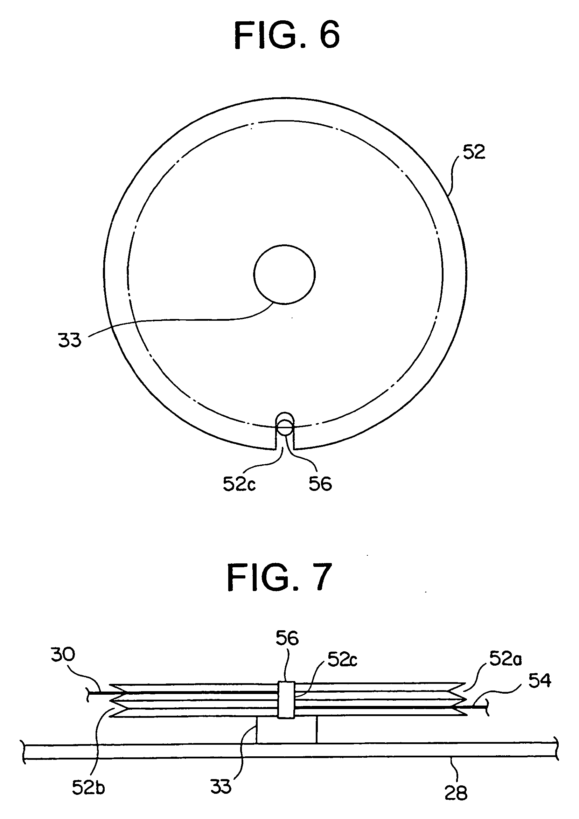

Next, Fig. 5 is a front view showing an elevator load detecting device according to Embodiment 3 not part of this invention, Fig. 6 is a front view of the detection pulley of Fig. 5, and Fig. 7 is a bottom view showing the detection pulley of Fig. 6. In the drawings, mounted on the frame 28 is a detector 51 for detecting the displacement amount of the shackle rods 21 through the detection wire 30.

The detector 51 has a detection shaft 33 fixed to the frame 28, a detection pulley 52 around which the other end portion of the detection wire 30 is fixedly wrapped and which is rotatable about the detection shaft 33, a tension imparting means 53 which urges the detection pulley 52 so as to take up the detection wire 30 (counterclockwise in Fig. 5) and imparts tension to the detection wire 30, and a sensor main body 36 which detects the rotation angle of the detection pulley 52 and outputs a detection signal.

The tension imparting means 53 has a tension imparting wire 54 whose one end portion is fixedly wrapped around the detection pulley 52, and a tension spring 55 connected between the tension imparting wire 54 and the frame 28.

In the outer peripheral portion of the detection pulley 52, there are provided first and second grooves 52a and 52b. The detection wire 30 is wrapped around the first groove 52a, and the tension imparting wire 54 is wrapped around the second groove 52b.

Further, in the outer peripheral portion of the detection pulley 52, there is provided a slit 52c. A metal fixing member 56 is inserted into the slit 52c. The other end portion of the detection wire 30 and one end portion of the tension imparting wire 54 are held between the slit 52c and the metal fixing member 56 and fixed to the detection pulley 52. Otherwise, this embodiment is of the same construction as Embodiment 1.

In this load detecting device, the tension imparting means 53 having the tension imparting wire 54 and the tension spring 55 is used, so that even if the diameter of the detection pulley 52 is changed, the tension imparted to the detection wire 30 is the same as the resilient force of the tension spring 55, making it possible to impart tension to the detection wire 30 in a stable manner and to freely select the diameter of the detection pulley 52.

Further, since the detection wire 30 and the tension imparting wire 54 are fixed to the detection pulley 52, it is possible to prevent occurrence of slippage between the wires 30, 54 and the detection pulley 52.

Further, the wires 30 and 54 are separately wrapped around the first and second grooves 52a and 52b, so that even when the rotation angle of the detection pulley 52 is large, it is possible to smoothly take up the wires without involving intersection.

While in Embodiment 3, the wires 30 and 54 are fixed at the same circumferential position of the detection pulley 52, it is also possible to separately fix them at different position.

### Embodiment 4

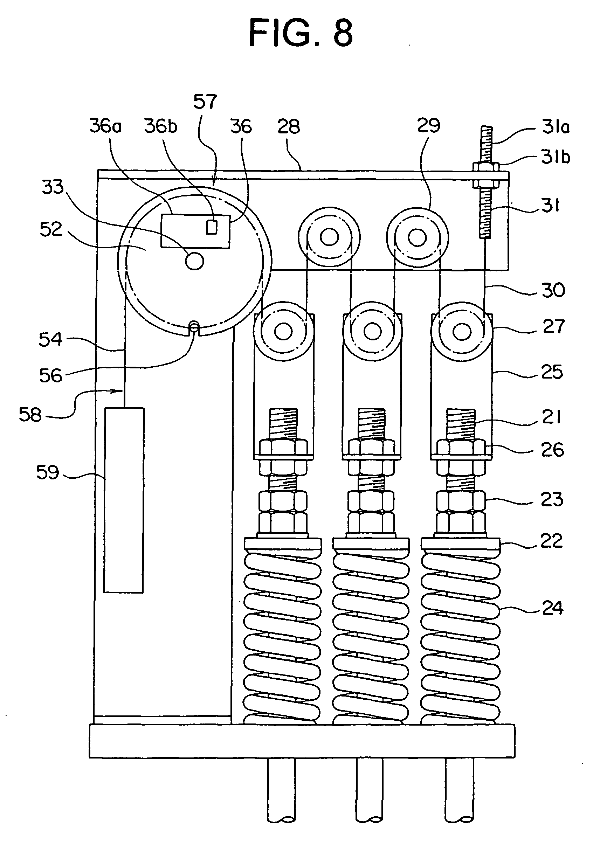

Next, Fig. 8 is a front view showing an elevator load detecting device according to Embodiment 4 not part of this invention. In the drawing, mounted on the frame 28 is a detector 57 for detecting the displacement amount of the shackle rods 21 through the detection wire 30.

The detector 57 has a detection shaft 33 fixed to the frame 28, a detection pulley 52 around which the other end portion of the detection wire 30 is fixedly wrapped and which is rotatable about the detection shaft 33, a tension imparting means 58 which urges the detection pulley 52 so as to take up the detection wire (counterclockwise in Fig. 8) and imparts tension to the detection wire 30, and a sensor main body 36 which detects the rotation angle of the detection pulley 52 and outputs a detection signal.

The tension imparting means 58 has a tension imparting wire 54 whose one end portion is fixedly wrapped around the detection pulley 52 and a weight 59 suspended at the other end of the tension imparting wire 54. Otherwise, this embodiment is of the same construction as Embodiment 3.

In this load detecting device, the tension imparted to the detection wire 30 is determined by the weight of the weight 59, so that the tension is kept at a fixed level, and the expansion of the detection wire 30 is fixed. Thus, it is possible to achieve an improvement in detection accuracy.

### Embodiment 5

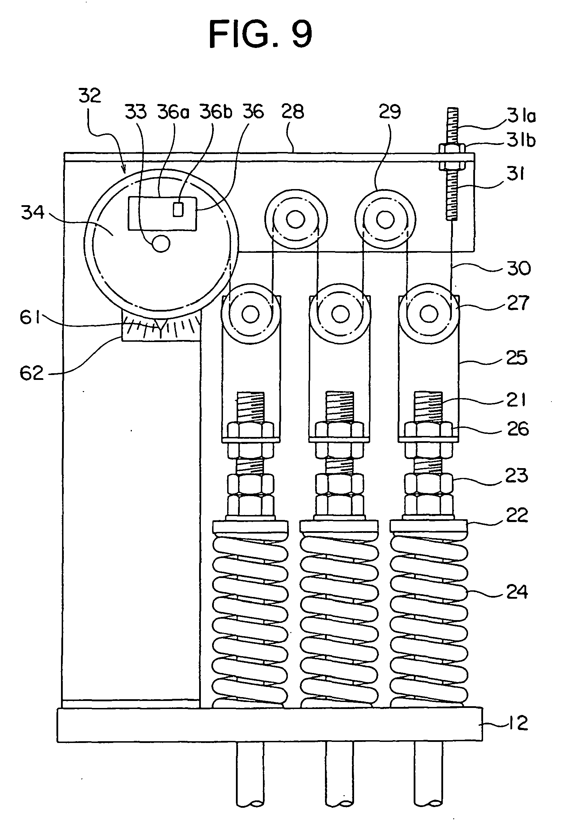

Next, Fig. 9 is a front view showing an elevator load detecting device according to Embodiment 5 not part of this invention. In the drawing, an indicator 61 is fixed to the outer peripheral portion of the detection pulley 34. Further, on the frame 28, there is provided a scale 62 opposed to the indicator 61. Otherwise, this embodiment is of the same construction as Embodiment 1.

In this load detecting device, it is possible to effect the angle adjustment of the detection pulley 34 more accurately and to reset the angle of the detection pulley 34 more easily.

Suppose, for example, the state in which half the rated load (half load) is on the car 18 is the reference state; by effecting adjustment such that the indicator 61 indicates zero of the scale 62 in the reference state, the indicator 61 moves to the right from zero when the load is less than that of the reference state. When the load is larger than that of the reference state, the indicator 61 moves to the left from zero.

### Embodiment 6

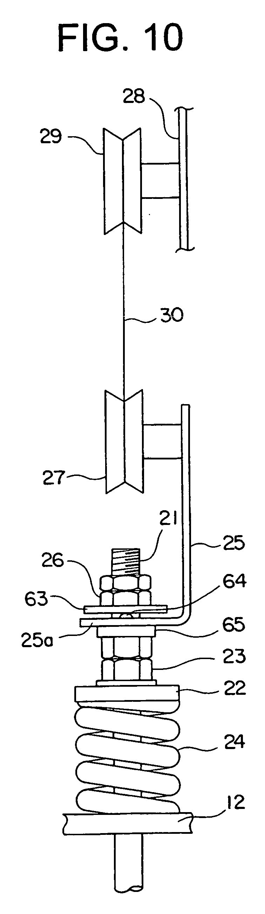

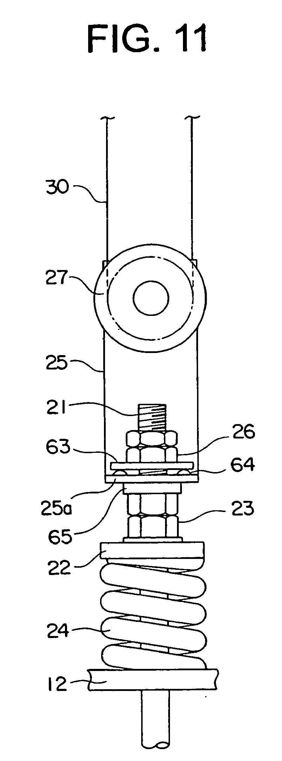

Next, Fig. 10 is a side view showing a main portion of an elevator load detecting device according to Embodiment 6 of this invention, and Fig. 11 is a front view showing a main portion of Fig. 10. In the drawings, a pulley support member 25 has a horizontal portion 25a through which a shackle rod 21 is passed. Mounted to the shackle rod 21 is a support seat 63 opposed to the upper surface of the horizontal portion 25a. Upward movement of the support seat 63 is regulated by a nut 26.

Fixed to the horizontal portion 25a are a pair of semi-spherical protrusions 64 held in point contact with thee support seat 63. Between the horizontal portion 25a and the nut 23, there is provided an elastic member 65 consisting of rubber or the like through which the shackle rod 21 is passed.

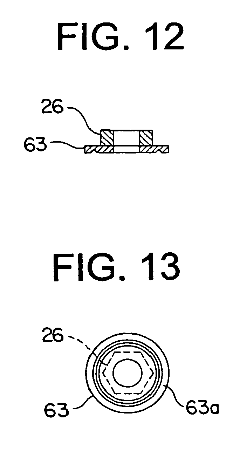

Fig. 12 is a sectional view of the nut 26 and the support seat 63 of Fig. 11, and Fig. 13 is a bottom view showing the support seat 63 of Fig. 12. In the drawings, in the bottom surface of the support seat 63, there is provided an annular support groove 63a with a V-shaped sectional structure whose center is at the center of the cross section of the shackle rod 21.

The pair of protrusions 64 are arranged such that they are positioned in a straight line passing the center of the cross section of the shackle rod 21. Further, the forward end portions of the protrusions 64 are inserted into the support groove 63a and abut the inner wall of the support groove 63a. Otherwise, this embodiment is of the same construction of Embodiment 1.

In this load detecting device, the support seat 63 and the protrusions 64 are provided between the pulley support member 25 and the shackle rod 21, and the protrusions 64 are held in point contact with the support seat 63, so that relative inclination of the shackle rod 21 with respect to the horizontal portion 25a is permitted.

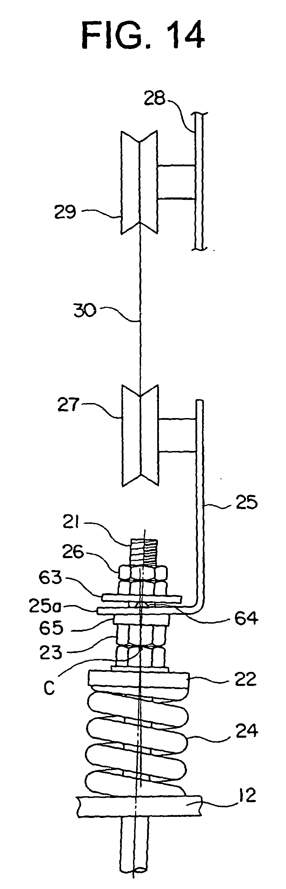

That is, even if the shackle rod 21 is inclined as a result of ascent/descent of the car 18, the rod-side pulley 27 is always pulled in the same direction by the tension acting on the detection wire 30, so that the rod-side pulley 27 is not inclined. Thus, it is possible to prevent generation of detection error due to inclination of the shackle rod 21. Fig. 14 is a side view showing a state in which the shackle rod 21 of Fig. 10 is inclined, with the shackle rod 21 being inclined about the rocking center C.

Further, since the elastic member 65 exists between the horizontal portion 25a and the shackle spring 24, the protrusions 64 are not separated from the support seat 63 even when the shackle rod 21 moves violently, making it possible to swing the pulley support member 25 in a stable manner with respect to the shackle rod 21. Further, it is possible to restrain generation of noise in the contact portion.

### Embodiment 7

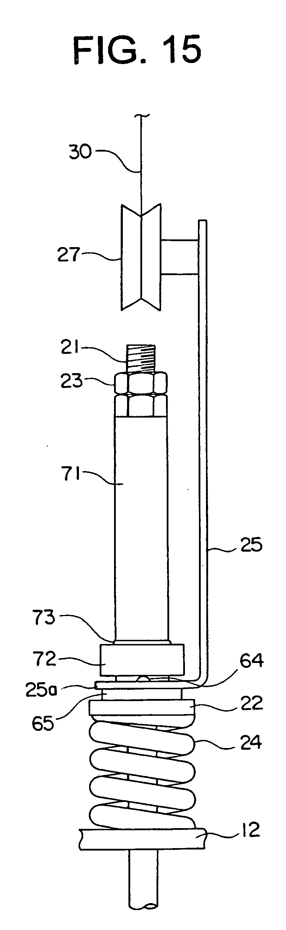

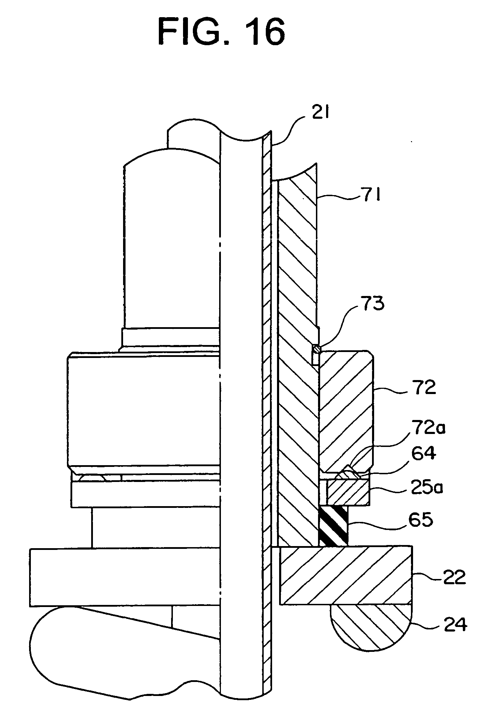

Next, Fig. 15 is a side view showing a main portion of an elevator load detecting device according to Embodiment 7 not part of this invention, and Fig. 16 is a half sectional view of a main portion of Fig. 15.

In the drawings, between the nut 23 and the spring seat 22, there is arranged a cylindrical collar 71 surrounding the shackle rod 21. The load of the shackle rod 21 is transmitted to the shackle spring 24 through the nut 23, the collar 71, and the spring seat 22.

The collar 71 is passed through the horizontal portion 25a of the pulley support member 25. An elastic member 65 exists between the horizontal portion 25a and the spring seat 22. Above the horizontal portion 25a, there is arranged an annular support seat (guide member) 72 surrounding the collar 71. In the lower surface of the support seat 72, there is provided an annular support groove 72a opposed to the horizontal portion 25a. The support groove 72a has a V-shaped sectional structure.

A pair of semi-spherical protrusions 64 are fixed to the horizontal portion 25a. The pair of protrusions 64 are arranged so as to be situated in a straight line passing the center of the cross section of the shackle rod 21. The forward end portions of the protrusions 64 are inserted into the support groove 72a, and abut the inner wall of the support groove 72a. Attached to the outer peripheral portion of the collar 71 is a retaining ring (e.g., an E-ring) 73 for regulating upward movement of the support seat 72.

In this load detecting device, even when the nut 23 for fixing the spring seat 22 to the shackle rod 21 is spaced apart from the spring seat 22, the pulley support member 25 can be mounted at a position in the vicinity of the shackle spring 24, making it possible to restrain the error due to inclination of the shackle rod 21 and to achieve an improvement in detection accuracy.

In other words, in the construction of Embodiment 7, the nut 23 can be spaced apart from the spring seat 22 without deteriorating the detection accuracy. For example, in a case in which the distance between the adjacent shackle rods 21 is small, when the nuts 23 are threadedly engaged with the adjacent rods 21 at the same height, a sufficient space cannot be secured, and it is difficult to fasten the nuts 23. In such a case, by varying the length of the shackle rod 21 and the fastening position (height) of the nut 23 as shown in Fig. 15, the fastening of the nut 23 can be facilitated.

While in the above examples, the detectors 32, 51, and 57 for detecting the rotation angle of the detection pulleys 34 and 52 are used, it is also possible to use, for example, a differential transformer as long as it is possible to detect the displacement amount of the shackle rod 21 from the displacement amount of the other end portion of the detection wire 30.

Further, while in the above examples, the pulley support members 25 and the rod-side pulleys 27 are mounted to all of the three shackle rods 21, it is also possible to mount the pulley support members 25 and the rod-side pulleys only to a part of a plurality of shackle rods.

For example, it is also possible to mount the pulley support member and the rod-side pulley to only one of a plurality of shackle rods. In this case, the frame-side pulley is unnecessary; however, by wrapping the detection wire around the rod-side pulley, it is possible to detect the displacement of the shackle rod in an enlarged state.

Further, when mounting the pulley support members and the rod-side pulleys to a plurality of shackle rods, (N-1) frame-side pulleys are preferably used for N rod-side pulleys (N is an integer of 2 or more), with the detection wire being alternately wrapped.

## Claims

1. An elevator comprising a load detecting device which is provided in an elevator equipped with a car (18), a plurality of main ropes (15) for suspending the car (18), a base (12) for receiving a load applied to the main ropes (15), a plurality of shackle rods (21) connected to end portions of the main ropes (15) and adapted to be displaced with respect to the base (12) according to the load, and a plurality of shackle springs (24) provided between the shackle rods (21) and the base (12) and adapted to expand and contract with displacement of the shackle rods (21), the device adapted to detect the load of the car (18) from displacement of the shackle rods (21), comprising:
a pulley support (25) connected to at least one of the shackle rods (21) and adapted to be displaced integrally with the shackle rods (21), wherein the pulley support member (25) has a horizontal portion (25a) through which a shackle rod (21) is passed, a support seat (63) opposed to the horizontal portion (25a) is mounted to the shackle rod (21), a pair of protrusions (64) held in point contact with the support seat (63) are fixed to the horizontal portion (25a), and relative inclination of the shackle rod (21) with respect to the horizontal portion (25a) is permitted;
a rotatable rod-side pulley (27) mounted on the pulley support member (25);
a frame (28) provided on the base (12);
a detection wire (30) whose intermediate portion is wrapped around the rod-side pulley (27) and whose one end portion is connected to the frame (28); and
a detector (32) which is mounted on the frame (28), to which the other end portion of the detection wire (30) is connected and which is adapted to detect the displacement amount of the shackle rods (21) through the detection wire (30).

2. The elevator according to claim 1, further comprising a rotatable frame-side pulley (29) which is mounted on the frame (28) and around which the intermediate portion of the detection wire (30) is wrapped.

3. The elevator according to claim 2, wherein the pulley support members (25) and the rod-side pulleys (27) are respectively mounted on N (N is an integer of 2 or more) said shackle rods (21), (N-1) of said frame-side pulleys (29) are mounted on the frame (28), and the intermediate portion of the detection wire (30) is alternately wrapped around the rod-side pulleys (27) and the frame-side pulleys (29).

4. The elevator according to claim 1, wherein the detector (32) includes:
a rotatable detection pulley (34) which is mounted on the frame (28) and around which the other end portion of the detection wire (30) is wrapped;
a sensor main body (36b) adapted to detect the rotation angle of the detection pulley (34); and
tension imparting means (35) for imparting tension to the detection wire (30).

5. The elevator according to claim 4, wherein the tension imparting means (35) is a torsion spring (35) provided between the frame (28) and the detection pulley (34) that is adapted to urge the detection pulley (34) so as to take up the detection wire (30).

6. The elevator according to claim 1, wherein one end portion of the detection wire (30) is connected to the frame (28) through the intermediation of a fastening member (31) capable of being displaced with respect to the frame (28).

## Patentansprüche

1. Aufzug, der eine Lasterfassungseinrichtung umfasst, die an dem Aufzug vorgesehen ist, der mit einer Kabine (18), einer Vielzahl von Hauptseilen (15) zum Aufhängen der Kabine (18), einer Basis (12) zum Aufnehmen einer Last, die an die Hauptseile (15) aufgebracht wird, einer Vielzahl von Bügelstangen (21), die mit den Endabschnitten der Hauptseile (15) verbunden sind und so eingerichtet sind, dass sie in Bezug auf die Basis (12) gemäß der Last versetzt werden können, und einer Vielzahl von Bügelfedern (24) ausgerüstet ist, die zwischen den Bügelstangen (21) und der Basis (12) vorgesehen sind und so eingerichtet sind, dass sie sich mit der Versetzung der Bügelstangen (21) ausdehnen und verkürzen, wobei die Einrichtung, die so eingerichtet ist, dass sie die Last der Kabine (18) durch die Versetzung der Bügelstangen (21) erfasst, umfasst:
eine Scheibenlagerung (25), die mit zumindest einer der Bügelstangen (21) verbunden ist und die so eingerichtet ist, dass sie integral mit den Bügelstangen (21) versetzt wird, in der die Scheibenlagerung (25) einen horizontalen Abschnitt (25a) hat, durch den die Bügelstange (21) hindurchgelangt, ein Auflagersitz (63), der dem horizontalen Abschnitt (25a) entgegengesetzt ist, an der Bügelstange (21) angebracht ist, zwei Vorsprünge (64), die in Kontakt mit dem Auflagersitz (63) gehalten werden, an dem horizontalen Abschnitt (25a) befestigt sind und eine relative Neigung der Bügelstange (21) in Bezug auf den horizontalen Abschnitt (25a) erlaubt ist;
eine drehbare stangenseitige Scheibe (27), die an dem Scheibenlagerungselement (25) angebracht ist;
einen an der Basis vorgesehenen Rahmen (28);
einen Erfassungsdraht (30), dessen Zwischenabschnitt um die drehbare stangenseitige Scheibe (27) herum gewickelt ist und dessen Endabschnitt mit dem Rahmen (28) ' verbunden ist; und
einen an dem Rahmen (28) angebrachten Detektor (32) an dem der andere Endabschnitt des Erfassungsdrahtes (30) angebracht ist und der so eingerichtet ist, dass er die Versetzungsgröße der Bügelstangen (21) durch den Erfassungsdraht (30) erfasst.

2. Aufzug nach Anspruch 1, der ferner eine drehbare rahmenseitige Scheibe (29) umfasst, die an dem Rahmen (28) angebracht ist, und um die ein Zwischenabschnitt des Erfassungsdrahtes (30) herum gewickelt ist.

3. Aufzug nach Anspruch 2, in dem die Scheibenlagerungselemente (25) und die stangenseitigen Scheiben (27) jeweils an N (N ist eine ganze Zahl größer oder gleich 2) Bügelstangen (21) angebracht sind, (N-1) der rahmenseitigen Scheiben (29) an dem Rahmen (28) angebracht sind, und der Zwischenabschnitt des Erfassungsdrahtes (30) abwechselnd um die stangenseitigen Scheiben (27) und die rahmenseitigen Scheiben (29) herum gewickelt ist.

4. Aufzug nach Anspruch 1, in dem der Detektor (32) beinhaltet:
eine drehbare Erfassungsscheibe (34), die an dem Rahmen (28) angebracht ist und um die das andere Ende des Erfassungsdrahtes (30) herum gewickelt ist;
einen Sensorhauptkörper (36b), der so eingerichtet ist, dass er den Drehwinkel der Erfassungsscheibe (34) erfasst; und
ein Spannungsvermittlungselement (35), zum Vermitteln der Spannung zu dem Erfassungsdraht (30).

5. Aufzug nach Anspruch 4, in dem das Spannungsvermittlungselement (35) eine zwischen dem Rahmen (28) und der Erfassungsscheibe (34) vorgesehene Torsionsfeder (35) hat, die so eingerichtet ist, dass sie die Erfassungsscheibe (34) in eine Richtung drängt um den Erfassungsdraht (30) aufzunehmen.

6. Aufzug nach Anspruch 1, in dem ein Endabschnitt des Erfassungsdrahtes (30) mit dem Rahmen (28) über eine Vermittlung eines Befestigungselements (31) verbunden ist, das in Bezug auf den Rahmen (28) versetzt werden kann.

## Revendications

1. Elévateur comprenant un dispositif de détection de charge qui est prévu dans un élévateur équipé d'une cabine (18), une pluralité de câbles principaux (15) pour suspendre la cabine (18), une base (12) pour recevoir une charge appliquée sur les câbles principaux (15), une pluralité de tiges de manille (21) raccordées aux parties d'extrémité des câbles principaux (15) et adaptées pour être déplacées par rapport à la base (12) selon la charge, et une pluralité de ressorts de manille (24) prévus entre les tiges de manille (21) et la base (12) et adaptés pour se détendre et se contracter par rapport au déplacement des tiges de manille (21), le dispositif adapté pour détecter la charge d'une cabine (18) à partir du déplacement des tiges de manille (21), comprenant :
un support de poulie (25) raccordé à au moins l'une des tiges de manille (21) et adapté pour être déplacé intégralement avec les tiges de manille (21), dans lequel l'élément de support de poulie (25) a une partie horizontale (25a) à travers laquelle une tige de manille (21) est passée, un siège de support (63) opposé à la partie horizontale (25a) est monté sur la tige de manille (21), une paire de saillies (64) maintenues en contact ponctuel avec le siège de support (63) sont fixées sur la partie horizontale (25a), et l'inclinaison relative de la tige de manille (21) par rapport à la partie horizontale (25a) est permise ;
une poulie côté tige rotative (27) montée sur l'élément de support de poulie (25) ;
un cadre (28) prévu sur la base (12) ;
un fil de détection (30) dont la partie intermédiaire est enroulée autour de la poulie côté axe (27) et dont une partie d'extrémité est raccordée au cadre (28) ; et
un détecteur (32) qui est monté sur le cadre (28), auquel l'autre partie d'extrémité du fil de détection (30) est raccordée et qui est adapté pour détecter la quantité de déplacement des tiges de manille (21) à travers le fil de détection (30).

2. Elévateur selon la revendication 1, comprenant en outre une poulie côté cadre rotative (29) qui est montée sur le cadre (28) et autour de laquelle la partie intermédiaire du fil de détection (30) est enroulée.

3. Elévateur selon la revendication 2, dans lequel les éléments de support de poulie (25) et les poulies côté tige (27) sont respectivement montés sur N (N est un nombre entier de 2 ou plus) desdites tiges de manille (21), (N-1) desdites poulies côté cadre (29) sont montées sur le cadre (28), et la partie intermédiaire du fil de détection (30) est enroulée de manière alternative autour des poulies côté tige (27) et des poulies côté cadre (29).

4. Elévateur selon la revendication 1, dans lequel le détecteur (32) comprend :
une poulie de détection rotative (34) qui est montée sur le cadre (28) et autour duquel l'autre partie d'extrémité du fil de détection (30) est enroulée ;
un corps principal de capteur (36b) adapté pour détecter l'angle de rotation de la poulie de détection (34) ; et
un moyen communiquant une tension (35) pour communiquer une tension au fil de détection (30).

5. Elévateur selon la revendication 4, dans lequel le moyen communiquant une tension (35) est un ressort de torsion (35) prévu entre le cadre (28) et la poulie de détection (34) qui est adapté pour pousser la poulie de détection (34) de manière à faire monter le fil de détection (30).

6. Elévateur selon la revendication 1, dans lequel une partie d'extrémité du fil de détection (30) est raccordée au cadre (28) par l'intermédiaire d'un élément de fixation (31) capable d'être déplacé par rapport au cadre (28).
